# EUROPÄISCHE PATENTANMELDUNG

(11) **EP 0 681 397 A2**
(43) Veröffentlichungstag der Anmeldung: **08.11.1995**
(21) Anmeldenummer: 95106685.1
(22) Anmeldetag: 04.05.1995
(51) Int. Cl.: H04N 5/44

(54) **Multimediagerät**

(30) Priorität: 05.05.1994 DE 4415833
(71) Anmelder: FRABA Technology and Trading GmbH, D-76307 Karlsbad-Ittersbach (DE)
(72) Erfinder: Moshe, Sade, Midgal Ha'emek 10500 (IL)
(74) Vertreter: Becker, Maria, Dipl.-Phys.

(57) **Zusammenfassung**

Die Erfindung betrifft ein Mediengerät, das vielfältige Anwendungsmöglichkeiten bietet, dabei aber noch einfach zu bedienen ist und kostengünstig hergestellt werden kann. Das Mediengerät enthält ein fernsteuerbares Fernsehgerät und eine integrierte Steuervorrichtung (10) zur Aufnahme von Steuersignalen, zum Senden von Signalen und zur Ansteuerung eines Bildschirms (38) des Fernsehgerätes. Die Steuervorrichtung besteht aus einer zentralen Signalverarbeitungs- und Steuereinheit (11), einem Modem (24), einer Anzeigesteuereinheit (36), einem Eingangssteuergerät (30) zur Aufnahme drahtlos übermittelter Eingangssteuersignale und deren Weiterleitung an die Signalverarbeitungs- und Steuereinheit und einer Sammelsteuerleitung für die Ansteuerung des Bildschirms.

## Beschreibung

Die Erfindung betrifft ein Mediengerät, enthaltend ein fernsteuerbares Fernsehgerät, mit einer integrierten Steuervorrichtung zur Aufnahme von Steuersignalen, zum Senden von Signalen und zur Ansteuerung eines Bildschirms des Fernsehgerätes.

Es sind fernsteuerbare Fernsehgeräte bekannt, die neben der Möglichkeit, die verschiedenen Programme zu empfangen, noch weitere Funktionen ausführen können. Wenn geeignete Anschlüsse und Zusatzmodule in dem Fernsehgerät vorhanden sind, kann beispielsweise Bildschirmtext empfangen werden, über BTX können Verbindungen zu Banken, Reisebüros und anderen zentralen Datenbanken hergestellt werden sowie Videorecorder und Kamera angeschlossen werden. Das Fernsehgerät ist sehr einfach zu bedienen.

Neben Fernsehgeräten werden als Mediengerät auch Personal Computer eingesetzt. Ein PC kann ohne Zusatzgeräte keine Fernsehprogramme empfangen, er ist in seinem Anwendungsbereich jedoch sehr flexibel und ausbaufähig. Als Anwendungsbeispiele seien nur die Textverarbeitung, die Tabellenkalkulation und die Anschlußmöglichkeit an das Telekommunikationsnetz genannt. Heutige PC's sind äußerst leistungsfähig und können beispielsweise bereits Videoaufnahmen speichern und wiedergeben. Die Tendenz entwickelt sich allgemein dahin, PC's immer leistungsfähiger auszugestalten, so daß sie weitere, bisher von einem Computer nicht bewältigbare Aufgaben übernehmen können. Derartige PC's sind jedoch sehr teuer und nur von Spezialisten sachgerecht zu bedienen.

Weiterhin kann der PC über eine Schnittstelle mit einem Fernsehgerät gekoppelt werden, so daß man auf diese Weise die Vorteile von Computer und Fernsehgerät nutzen kann. Diese Kopplung ist jedoch technisch sehr aufwendig. Es bedarf eines leistungsfähigen und damit teuren Computers, einer speziellen und sehr aufwendigen Schnittstellenschaltung und eines fachkundigen Bedieners, um die Anwendungsmöglichkeiten des PC's voll auszunutzen, so daß eine derartige Kombination aus PC und Fernsehgerät in der Allgemeinheit keine Akzeptanz findet. Eine Fernsteuerung ist dabei nicht einsetzbar.

Ausgehend von diesem Stand der Technik ist es Aufgabe der Erfindung, ein Mediengerät bereitzustellen, das vielfältigere Anwendungsmöglichkeiten bietet, dabei aber noch einfach zu bedienen ist und kostengünstig herstellbar ist.

Diese Aufgabe wird gelöst durch ein Mediengerät mit den Merkmalen des Patentanspruchs 1.

Weitere Ausgestaltungen sind Gegenstand der Ansprüche 2 bis 8.

Ein derartiges Mediengerät mit integrierter Steuervorrichtung ist beispielsweise an das Telekommunikationsnetz anschließbar mit den sich daraus ergebenden Vorteilen, wie Telefaxbetrieb, Nutzung von Datenbanken, Electronic Banking, BTX-Nutzung und dergleichen. Darüberhinaus ermöglicht es den direkten Zugriff auf die Telefonnummerndatenbank, eine automatische Anwahl einer bestimmten Telefonnummer sowie den Abruf von Fahrplänen. Auch sogenanntes "TV on demand", bei dem über die Telefonleitung ein Wunschfilm oder dgl. angefordert und über Satellit oder Kabel empfangen werden kann, ist mit dem Anschluß dieses Mediengerätes an die Telefonleitung möglich.

Dabei ist das neue Mediengerät über eine Fernsteuerung, die die Steuerbefehle an ein Eingangssteuergerät sendet, ansteuerbar, wobei das Eingangssteuergerät die Steuerbefehle an eine Signalverarbeitungs- und Steuereinheit weitergibt, die wiederum über eine Anzeigesteuereinheit den Bildschirm ansteuert. In dieser Ausgestaltung kann die Signalverarbeitungs- und Steuereinheit in einfachster Weise einen bekannten Microprozessor mit zugeordneten Speichermitteln aufweisen, wie sie in bekannten PC's Verwendung finden. Die Steuerbefehle für den Microprozessor, der mit einem bekannten Betriebssystem, beispielswiese DR-DOS, arbeitet, können von dem Eingangssteuergerät übersetzt werden.

Ein weiterer Vorteil besteht in der Möglichkeit das erfindungsgemäße Mediengerät über die Signalverarbeitungs- und Steuereinheit auch als Computer benutzen zu können. Damit ist es möglich über den Bildschirm des Fernsehgerätes jede Standardsoftware, integrierte- oder Anwendersoftware zu benutzen sowie Computerspiele durchzuführen. Ohne spezielle Kenntnisse über die Bedienung eines Computers ist auf einfachste Weise lediglich über die dem Bediener im Prinzip bekannte Fernsteuerung des Mediengerätes die Umschaltung von dem normalen Fernsehbetrieb auf Telefaxbetrieb, Electronic Banking, BTX-Nutzung etc. möglich.

Mit dem neuen Mediengerät ist also eine einfache und kostengünstige Verbindung geschaffen zwischen einem Fernsehsystem auf der einen und einem Computersystem auf der anderen Seite, wobei die einfache und jedermann vertraute Bedienbarkeit eines Fernsehgerätes in vorteilhafterweise gekoppelt ist mit den vielfältigen Anwendungsmöglichkeiten eines Computers ohne dabei einen Qualitätsverlust bezüglich der Fernsehqualität hinnehmen zu müssen.

Die Integration der Signalverarbeitungs- und Steuereinheit in das erfindungsgemäße Mediengerät gibt die Möglichkeit Betriebssyteme anzuwenden zum Betreiben von Programmen zur Verbesserung der Bedienbarkeit, beispielsweise durch sogenannte "desktop"-Programme oder ähnlichem. Derartige Programme können beispielsweise auch als Notizbücher oder "personal organizer" verwendet werden.

Darüberhinaus ist es mit dem neuen Mediengerät möglich, interaktive Dienste in Anspruch zu nehmen, beispielsweise Schulungen, Sprachkurse und dergleichen, wobei der Benutzer über das Mediengerät direkt mit dem Schulungszentrum in Verbindung steht und "on line" Fragen und Antworten übermittelbar sind.

Weiterhin ist die Fernsteuerung des erfindungsgemäßen Mediengerätes vorteilhafterweise durch eine an sich bekannte Infrarot-Fernbedienung gebildet, wobei jedoch den einzelnen Tasten der Fernbedienung gegebenenfalls mehrere Funktionen zugeordnet sind. Die Bedienung des Mediengerätes ist dadurch sehr einfach und erfordert keine speziell ausgebildete Fachkraft.

Für Bediener, die auch mit der Bedienung von Computern vertraut sind, ist als Fernsteuergerät eine bekannte Computertastatur einsetzbar, wobei die Tastatur Infrarot-Steuersignale sendet.

Wenn das Fernsteuergerät ein Mikrophon aufweist, ist das erfindungsgemäße Mediengerät unter Verwendung der Lautsprecher des Mediengerätes gleichzeitig als Telefon nutzbar. Ein zusätzlicher Telefonapparat ist nicht mehr notwendig.

Über einen PCMCIA-Anschluß sind an das Mediengerät Chip-Karten, wie sogenannte "smart cards", anschließbar. Dies eröffnet die Möglichkeit, über das Mediengerät beispielsweise verschlüsselte Informationen zu empfangen, Spiele zu laden oder insbesondere neue Programme nachladen zu können. Damit ist das erfindungsgemäße Mediengerät zukunftssicher. Neue Datenübermittlungsysteme oder dergleichen sind dann ohne Aufwand über eine "smart card" oder über einen an den PCMCIA-Anschluß anschließbaren Computer in das Mediengerät installierbar. Auch über die Telefonleitung ist eine Installation möglich.

Vorteilhafterweise weisen die Anzeigesteuereinheit und das Eingangssteuergerät je einen Mikroprozessor auf, mit denen die empfangenen oder zu sendenden Signale verarbeitet werden können.

In einer weiteren vorteilhaften Ausgestaltung ist zwischen dem Ausgang der Anzeigesteuereinheit und der Sammelsteuerleitung ein Pufferspeicher vorgesehen ist, der mit dem Eingangssteuergerät verbunden ist. Damit ist es möglich, daß direkt nach dem Einschaltimpuls des Mediengerätes, wenn die Signalverarbeitungs- und Steuereinheit das Betriebssystem lädt, bereits ein Bild auf dem Bildschirm erscheinen kann.

Vorteilhafterweise sind die Anzeigesteuereinheit und das Eingangssteuergerät mit der Signalverarbeitungs- und Steuereinheit synchronisierbar.

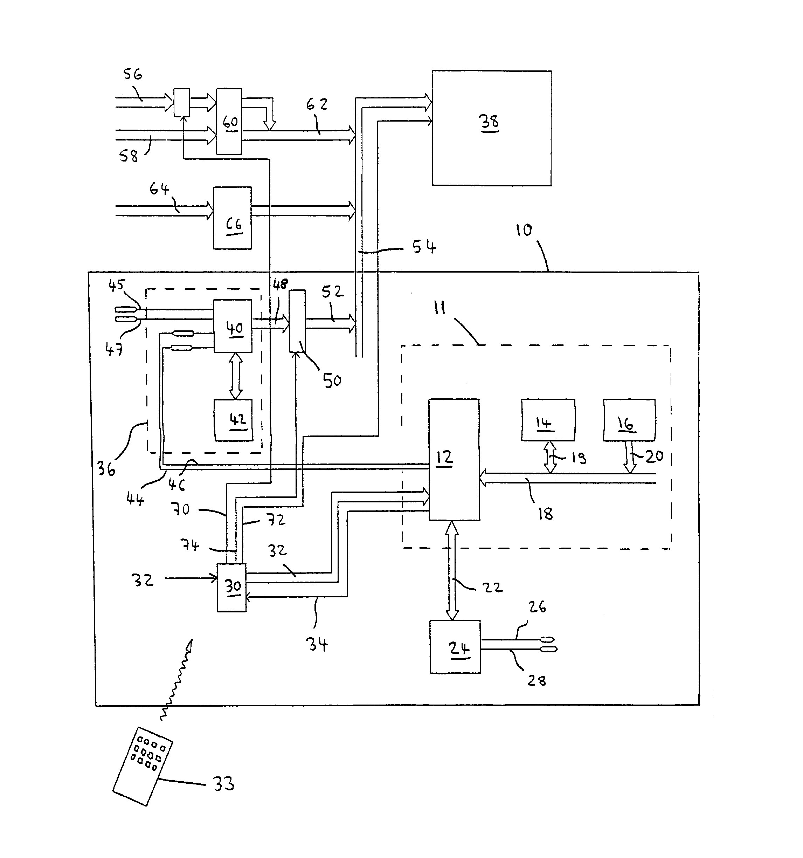

Im folgenden wird die Erfindung anhand eines Ausführungsbeispiels unter Bezugnahme auf die Zeichnung im einzelnen beschrieben.

Die einzige Figur der Zeichnung zeigt schematisch ein Blockschaltbild der wesentlichen Schaltungen des erfindungsgemäßen Mediengerätes mit den erforderlichen Leitungen.

In der folgenden Beschreibung des Ausführungsbeispiels werden mit dem Begriff "Leitung" ein- oder mehradrige Leitungen zum Übertragen von Signalen verstanden.

Das Mediengerät enthält im wesentlichen ein fernsteuerbares Fernsehgerät und weist eine in das Mediengerät integrierte Steuervorrichtung 10 zum Empfang und Senden von leitungsgebundenen Signalen und zur Aufnahme drahtlos übermittelter Signale sowie zur Ansteuerung eines Bildschirms 38 des Mediengerätes auf.

Die Steuervorrichtung 10 weist eine zentrale Signalverarbeitungs- und Steuereinheit 11 auf, die einen Mikroprozessor 12, beispielsweise ein 386'er-Prozessor oder damit vergleichbaren Prozessor, sowie diesem zugeordnete Speichermittel 14 und 16, beispielsweise einen Arbeitsspeicher 14, der gelesen und beschrieben werden kann (RAM) und einen Festwertspeicher 16, der extern programmiert und vom Mikroprozessor nur gelesen werden kann (EPROM), enthält. Die Speicher 14 und 16 sind über Leitungen 18, 19 und 20 mit dem Mikroprozessor 12 verbunden oder können in diesen integriert sein. In weiterer Ausgestaltung können noch "flash memories" vorgesehen sein. Der Mikroprozessor 12 arbeitet mit einem für Computer üblichen Betriebssystem, beispielsweise DR-DOS. Die Signalverarbeitungs- und Steuereinheit 11 weist einen nicht dargestellten PCMCIA-Anschluß auf.

Weiter weist die Steuervorrichtung 10 ein Modem 24 auf, das über eine Leitung 22 mit dem Mikroprozessor 12 verbunden und über Leitungen 26 und 28 an ein Telefonnetz anschließbar ist.

Die Steuervorrichtung 10 des erfindungsgemäßen Mediengerätes weist weiter ein Eingangssteuergerät 30 auf, das an seinem Eingang 32 drahtlos übermittelte Eingangssteuersignale empfängt. Die Eingangssteuersignale werden vorzugsweise von einem Fernsteuergerät 33 in Form von Infrarotsignalen gesendet. Ausgestaltungen des Fernsteuergerätes 33 sind weiter unten beschrieben.

Das Eingangssteuergerät 30 weist einen Mikroprozessor auf, der die Eingangssteuersignale in Form von Infrarotsignalen in mit dem Mikroprozessor 12 der Signalverarbeitungs- und Steuereinheit 11 kompatible, interne Signale umwandelt, die über eine Leitung 32 dem Mikroprozessor 12 übermittelt werden. Über eine Leitung 34 ist das Eingangssteuergerät 30 mit dem Mikroprozessor 12 synchronisierbar.

Weiter weist die Steuervorrichtung 10 eine Anzeigesteuereinheit 36 auf, die den Bildschirm 38 ansteuert. Die Anzeigesteuereinheit 36 enthält einen Mikroprozessor 40 und einen mit diesem Prozessor verbundenen oder integrierten Speicher 42. Die Anzeigesteuereinheit 36 arbeitet nicht nach dem bei Computern üblichen VGA-Standard, sondern nach dem sogenannten Mega-Text-Standard. Der Mikroprozessor 40 enthält einen sogenannten RISC-Chip (reduced information set computing). Über zwei Leitungen 44 und 46 ist die Anzeigesteuereinheit 36 von der Signalverarbeitungs- und Steuereinheit 11 ansteuerbar und mit dieser synchronisierbar. Über eine Leitung 48 werden die in der Anzeigesteuereinheit 36 erzeugten Signale in einen Pufferspeicher 50 eingespeist und von diesem über eine Leitung 52 auf eine Sammelsteuerleitung 54 übertragen. Die Sammelsteuerleitung 54 überträgt die Signale an den Bildschirm 38. Über Leitungen 45 und 47 erfolgt die Übertragung der Synchronisationssignale für die Zeilen- und Bildfrequenz des Bildschirms 38.

Desweiteren sind Eingangsleitungen 56 und 58 vorgesehen, die über einen Multiplexer 60 und eine Leitung 62 mit der Sammelsteuerleitung 54 verbunden sind. Die Eingangsleitungen 56 und 58 dienen der Übertragung von für den Normalbetrieb des Fernsehgerätes vorgesehenen Signalen, wie beispielsweise Signale zur Steuerung der Lautstärke, Helligkeit usw. (Leitung 58) und auch Textsignalen (Leitung 56). Über eine Eingangsleitung 64, beispielsweise SCART-Anschluß können Signale von einem externen Gerät, wie beispielsweise Videorecorder oder dergleichen, über eine Schaltung 66, wie beispielsweise SCART-Karte und eine Leitung 68 auf die Sammelsteuerleitung 54 und damit auf den Bildschirm übertragen werden. Zur Eingabe von Steuersignalen direkt auf den Bildschirm ist das Eingangssteuergerät 30 über eine Leitung 70 mit dem Texteingang des Multiplexers 60 verbunden und über eine Leitung 72 direkt mit dem Bildschirm 38.

Über eine Leitung 74 ist das Eingangssteuergerät 30 direkt mit dem Pufferspeicher 50 verbunden. Nach dem Einschalten des Mediengerätes benötigt die Signalverarbeitungs- und Steuereinheit 11 einige Sekunden bis sie betriebsbereit ist. Damit in dieser Zeit auf dem Bildschirm 38 ein Bild erscheint erhält beim Einschalten des Mediengerätes der Pufferspeicher 50 von dem Eingangssteuergerät 30 über die Leitung 74 einen Impuls, wodurch direkt nach dem Einschalten der Pufferspeicher ein Bild auf dem Bildschirm liefert.

Das Fernsteuergerät 33 zur Fernsteuerung des erfindungsgemäßen Mediengerätes ist in einer einfachen Ausführung aus einer bekannten Infrarot-Fernbedienung für bekannte Fernsehgeräte entwikkelt. Dabei ist es vorgesehen, den Tasten des Fernsteuergerätes 33 mehrere Funktionen zuzuordnen, um die erweiterten Funktionen des erfindungsgemäßen Mediengerätes mit der bekannten Fernbedienung aufrufen zu können. So kann beispielsweise einerseits mit den Tasten ein bestimmtes Fernsehprogramm angewählt werden und andererseits durch eine auch durch Tastendruck aktivierte Umschaltfunktion den Tasten einzelne Buchstaben des Alphabets oder Zahlen sowie Steuerfunktionen zugeordnet werden, zum Eingeben von Text- oder Steuerbefehlen.

In einer anderen Ausgestaltung der Erfindung besteht das Fernsteuergerät 33 aus einer Tastatur, wie man sie von der Computerbedienung her kennt, wobei die Eingangssteuerbefehle von der Tastatur als Infrarotsignale, also drahtlos, an das Eingangssteuergerät 30 gesendet werden können.

In einer weiteren Ausgestaltung der Erfindung ist in dem Fernsteuergerät ein Mikrophon vorgesehen, so daß das Fernsteuergerät in Verbindung mit dem Mediengerät über das in der Steuervorrichtung 10 enthaltene Modem 24 unter Verwendung der Lautsprecher des Mediengerätes direkt als Telefon verwendbar ist.

Die Steuervorrichtung 10 soll im folgenden anhand von Funktionsbeispielen näher erläutert werden:
Über das Fernsteuergerät 33 wird das Mediengerät bedient. Dabei sendet das Fernsteuergerät 33 die Signale in Form von Infrarot-Signalen an das Eingangssteuergerät 30. Das Eingangssteuergerät 30 leitet die als Infrarot-Signale empfangenen Signale an die jeweilige Komponente, beispielsweise an den Mikroprozessor 12, weiter. Damit die weitergeleiteten Signale von dem Mikroprozessor 12 verstanden werden, müssen sie zuvor in dem Eingangssteuergerät in für den Mikroprozessor 12 kompatible Signale umgewandelt worden sein. Die Umwandlung und korrekte Weiterleitung der Signale wird in dem Eingangssteuergerät 30 von einem Mikroprozessor durchgeführt.

Wird das Mediengerät beispielsweise auf Empfang eines Fernsehprogramms eingestellt, so sind die Signalverarbeitungs- und Steuereinheit 11 sowie das Modem 24 im wesentlichen inaktiv.

Nun kann der Bediener durch Druck einer bestimmten Taste des Fernsteuergerätes 33 den Empfangsteil des Mediengerätes abschalten und zu anderen Funktionen umschalten. Andere Funktionen, wie beispielsweise Textverarbeitung, Telefaxbetrieb, Anschluß an Datenbanken, Spiele, oder dergleichen, werden dann im wesentlichen von der Signalverarbeitungs- und Steuereinheit 11 gesteuert, wobei die notwendigen Abfragen über den Bildschirm 38 erfolgen und die Steuerbefehle über das Fernsteuergerät 33 eingegeben werden. Vorteilhafterweise ist der Bildschirm 38 dabei menueartig aufgeteilt, wie man es von verschiedenen Computerprogrammen kennt.

Andererseits kann das Mediengerät auch über das Telekommunikationsnetz aktiviert werden. Dazu ist die zentrale Signalverarbeitungs- und Steuereinheit 11 über das Modem 24 an das Telekommunikationsnetz angeschlossen. So können Telefax-Schreiben empfangen und nach Aufforderung über das Fernsteuergerät auf dem Bildschirm 38 dargestellt werden sowie über das Fernsteuergerät eingegebene Schreiben gesendet werden. In gleicher Weise können beispielsweise interaktive Dienste in Anspruch genommen und andere weiter oben bereits erwähnte Funktionen durchgeführt werden.

Über den Telefonleitungsanschluß besteht auch die Möglichkeit, das Mediengerät, nicht nur über das Fernsteuergerät 33, sondern auch, beispielsweise durch codierte Signale, über die Telefonleitung zu bedienen.

## Patentansprüche

1. Mediengerät, enthaltend ein fernsteuerbares Fernsehgerät, mit einer integrierten Steuervorrichtung (10) zur Aufnahme von Steuersignalen unterschiedlicher Signalquellen, zum Senden von Signalen und zur Ansteuerung eines Bildschirms (38) des Fernsehgerätes, bestehend aus
- einer zentralen Signalverarbeitungs- und Steuereinheit (11) mit einem programmierbaren Mikroprozessor (12) und zugeordneten Speichermitteln (14,16),
- einem mit der Signalverarbeitungs- und Steuereinheit (11) verbundenem Modem (24) für leitungsgebundene Ein- und Ausgangssignale,
- einer an der Signalverarbeitungs- und Steuereinheit (11) angeschlossenen Anzeigesteuereinheit (36),
- einem Eingangssteuergerät (30) zur Aufnahme drahtlos übermittelter Eingangssteuersignale und deren Weiterleitung an die Signalverarbeitungs- und Steuereinheit (11) und
- einer mit dem Ausgang der Anzeigesteuereinheit (36) und mit für den Normalbetrieb des Fernsehgerätes vorgesehenen Eingangsmitteln (60, 66) verbundenen Sammelsteuerleitung (54) für die Ansteuerung des Bildschirms (38).

2. Mediengerät nach Anspruch 1, dadurch gekennzeichnet, daß zur Fernsteuerung des Mediengerätes ein Fernsteuergerät (33) vorgesehen ist, das Infrarot-Steuersignale an das Eingangssteuergerät (30) sendet.

3. Mediengerät nach Anspruch 2, dadurch gekennzeichnet, daß als Fernsteuergerät (33) eine Computertastatur einsetzbar ist, die Infrarot-Steuersignale sendet.

4. Mediengerät nach einem der vorhergehenden Ansprüche 2 oder 3, dadurch gekennzeichnet, daß das Fernsteuergerät (33) ein Mikrophon aufweist.

5. Mediengerät nach einem der vorhergehenden Ansprüche, dadurch gekennzeichnet, daß die Signalverarbeitungs- und Steuereinheit (11) einen PCMCIA-Anschluß aufweist.

6. Mediengerät nach einem der vorhergehenden Ansprüche, dadurch gekennzeichnet, daß das Eingangssteuergerät (30) einen Mikroprozessor aufweist.

7. Mediengerät nach einem der vorhergehenden Ansprüche, dadurch gekennzeichnet, daß die Anzeigesteuereinheit (36) einen Mikroprozessor (40) und einen diesem zugeordneten Speicher (42) umfaßt.

8. Mediengerät nach einem der vorhergehenden Ansprüche, dadurch gekennzeichnet, daß zwischen dem Ausgang der Anzeigesteuereinheit (36) und der Sammelsteuerleitung (54) ein Pufferspeicher (50) vorgesehen ist, der mit dem Eingangssteuergerät (30) verbunden ist.

9. Mediengerät nach einem der vorhergehenden Ansprüche, dadurch gekennzeichnet, daß die Anzeigesteuereinheit (36) und das Eingangssteuergerät (30) mit der Signalverarbeitungs-und Steuereinheit (11) synchronisierbar sind.
